Europäisches Patentamt

European Patent Office

Office européen des brevets

(11) Veröffentlichungsnummer: **0 179 419**
**A2**

## (12) EUROPÄISCHE PATENTANMELDUNG

(21) Anmeldenummer: 85113274.6

(22) Anmeldetag: 19.10.85

(51) Int. Cl.⁴: **B 01 D 39/14**

(30) Priorität: 23.10.84 DE 3438769

(43) Veröffentlichungstag der Anmeldung:
30.04.86 Patentblatt 86/18

(84) Benannte Vertragsstaaten:
AT BE CH DE FR GB IT LI NL

(71) Anmelder: Christian Heinrich Sandler GmbH & Co. KG
Lamitzmühle
D-8676 Schwarzenbach/Saale(DE)

(72) Erfinder: Schreiner, Dieter, Dipl.-Ing. (FH)
Johann-Heinrich-Abt-Strasse 7
D-8660 Münchberg(DE)

(72) Erfinder: Geubtner, Michael, Dipl.-Ing. (FH)
Friedrich-Ebert-Strasse 28
D-8660 Münchberg(DE)

(74) Vertreter: LOUIS, PÖHLAU, LOHRENTZ & SEGETH
Kesslerplatz 1 P.B. 3055
D-8500 Nürnberg(DE)

(54) Filtermatte mit Fettindikator.

(57) Es wird eine Filtermatte (10,10') mit Fettindikator beschrieben, die aus einem Faservlies (12) und einer darauf aufgebrachten Beschichtung (14) besteht, deren Farbe sich bei einem Kontakt mit Fett und/oder Öl deutlich verändert. Dabei besteht die Beschichtung (14) mindestens aus einer Deckschicht (16), die Kieselsäure enthält, und ist die Deckschicht (16) auf einer Zone (18) der Filtermatte (10,10') angeordnet, die mindestens eine der beiden Hauptkomponenten eines durch Farbsynthese entstehenden Farbstoffes enthält

FIG.1

EP 0 179 419 A2

- 1 -

Filtermatte mit Fettindikator

Die vorliegende Erfindung betrifft eine Filtermatte mit Fettindikator, die aus einem Faservlies und einer darauf aufgebrachten Beschichtung besteht, deren Farbe sich bei einem Kontakt mit Fett und/oder Öl deutlich verändert.

Filtermatten für Dunstabzugshauben in Küchen reichern sich mit zunehmender Benutzungsdauer mit Fett- und Kochdunstpartikeln an, was dazu führt, daß der Druckverlust in der Filtermatte beim Absaugen zunehmend höher wird. Dadurch nimmt die Wirksamkeit der Filtermatte ab. Es ist daher erforderlich, derartige Filtermatten regelmäßig zu erneuern. Diese Erneuerung erfolgte bisher meist zu spät und zwar deswegen, weil die Verstopfung der Filtermatte durch abgeschiedenes Fett oder Öl häufig äußerlich nicht zu erkennen ist. Dies hat nicht nur den Nachteil einer Verminderung der Wirksamkeit der Filtermatte. Eine ganz erhebliche Gefahr besteht vor allem darin, daß sich in der Filtermatte hohe Fettmengen ansammeln können, die sich in einem Brandfall negativ auswirken können.

Es sind Filtermatten der eingangs genannten Art bekannt, die mit Indikatoren versehen sind, welche bei Erreichen einer gewissen Fettkonzentration in der Filtermatte zu einer Farbänderung führen. Dabei kann sich eine ursprünglich farblose Filtermatte plötzlich deutlich färben, oder es kann ein Farbumschlag eintreten.

Bei einer Filtermatte, wie sie aus dem DE-GM 78 09 170 bekannt ist, werden fett- oder öllösliche Farben verwendet, um diesen Farbumschlag zu erreichen. Dieses Vorgehen hat jedoch etliche Mängel. Bei der Verwendung fettlöslicher Farben ist im allgemeinen nicht mit einer sehr genauen Anzeige des Sättigungsgrades der Filtermatte zu rechnen. Es kann vielmehr u.U. sehr frühzeitig zu einem Farbumschlag kommen, wenn nämlich die fettlöslichen Farbstoffe auf der der Kochstelle o.dgl. zugekehrten Seite der Filtermatte angeordnet sind. Dies führt dazu, daß die Filtermatte zu bald ausgewechselt wird, was unnötige Kosten verursacht.

Aus der DE-PS 27 08 435 ist eine Filtermatte bekannt, bei der die fettlöslichen Farbstoffe auf der der Kochstelle o.dgl. abgekehrten Seite der Filtermatte angebracht sind, wobei dann eine Veränderung erst sichtbar wird, wenn die fettlöslichen Farbstoffe durch die Filtermatte hindurch zu deren bei Gebrauch sichtbarer Vorderseite diffundiert sind. Dieses Vorgehen hat den Nachteil, daß der Dicke der Filtermatte verhältnismäßig enge Grenzen gesetzt sind, so daß u.U. nur eine beschränkte Filterwirkung erreicht werden kann. Das dieser bekannten Filtermatte zugrunde liegende Migrationsprinzip kann außerdem auch bei voluminösen Filtern mit großen Faserzwischenräumen nicht verwendet werden, da bei derartigen Materialien der Farbstoff wegen der großen Zwischenräume keine Möglichkeit hat, zu wandern.

Bessere Ergebnisse dürften sich mit der vorher beschriebenen Filtermatte gemäß dem DE-GM 78 09 170 erreichen lassen, wo wenigstens ein Teil des Faservlieses mit einem Gemisch aus mindestens zwei ineinander unlöslichen Komponenten beschichtet ist, wobei die eine Komponente fett- und/oder öllöslich ist und eine Farbe aufweist, die sich deutlich von der Farbe des Fasergemisches und/oder der anderen Komponente unterscheidet, und wobei die andere Komponente nicht fett- und/oder öllöslich ist. Man geht dabei davon aus, daß durch die fett- bzw. öllösliche Komponente ein Farbumschlag eintritt, wenn eine hinreichende Sättigung der Filtermatte mit Fett oder Öl erreicht ist. Unabhängig von der Wahl der Farbkombinationen kann hierbei erreicht werden, daß der Farbumschlag erst sichtbar wird, wenn tatsächlich eine ausreichende Sättigung eingetreten ist, d.h. eine hinreichende Menge des fett- bzw. öllöslichen Farbstoffes tatsächlich gelöst ist. Nachteilig ist bei einem derartigen Vorgehen jedoch, daß nur eine beschränkte Zahl von Farbstoffkombinationen verwendet werden kann, um einen deutlichen Farbumschlag zu erreichen.

Ein weiterer Mangel dieser bekannten Filtermatte besteht darin, daß wenigstens ein Teil der Filtermatte mit einem Gemisch aus zwei ineinander unlöslichen Komponenten beschichtet wird. Dort wird also ein homogenes Gemisch verwendet.

Bei einer anderen Filtermatte der gattungsgemäßen Art wird zwar kein fett- oder öllöslicher Farbstoff angewandt, sondern außer zumindest einem Farbstoff auch eine Kieselsäure mit einer hohen spezifischen Oberfläche, die miteinander homogen vermischt werden. Durch die Notwendigkeit der homogenen Vermischung mindestens eines Farbstoffes mit einer Kieselsäure ergibt sich auch bei der zuletzt genannten Filtermatte der Mangel, daß der Farbumschlag oftmals nicht genau definiert ist, so daß diese bekannte Filtermatte ebenfalls noch Wünsche offen läßt.

Der vorliegenden Erfindung liegt deshalb die Aufgabe zugrunde, eine Filtermatte der eingangs genannten Art zu schaffen, die einfach herstellbar ist, und bei der ein Farbumschlag bei einem Kontakt mit Fett oder Öl noch deutlicher zum Vorschein kommt, als bei den bekannten gattungsgemäßen Filtermatten.

Diese Aufgabe wird erfindungsgemäß dadurch gelöst, daß die Beschichtung mindestens aus einer Deckschicht besteht, die bei einem Kontakt mit Fett und/oder Öl mindestens durchscheinend wird, und daß die Deckschicht auf einer Zone der Filtermatte angeordnet ist, die einen Farbstoff enthält.

Bei der erfindungsgemäßen Filtermatte kann die auf dem Faservlies aufgebrachte Beschichtung aus einer Deckschicht allein, oder aus einer Schicht aus einem Farbstoff und einer auf dieser Farbschicht angeordneten Deckschicht bestehen. Durch diesen Schichtenaufbau wird in jedem Fall der Vorteil erzielt, daß eine homogene Mischung zweier Komponenten entfallen kann, und daß durch den Schichtenaufbau der Farbumschlag wesentlich deutlicher ausfällt als bei den bekannten Filtermatten mit homogenen Gemischen zweier Farbkomponenten in einer Schicht.

Durch die Deckschicht ergibt sich unabhängig von der darunterliegenden Zone eine Filtermatte mit einer weißen oder schwach pastellfarbigen Oberfläche. Vorzugsweise wird diese Deckschicht auf der Ausströmseite, d.h. auf der Unterseite der Filtermatte angeordnet. Die Deckschicht ist erfindungsgemäß auf einer Zone der Filtermatte angeordnet, die einen Farbstoff enthält.

Bei einer Ausführungsform der erfindungsgemäßen Filtermatte ist die unter der Deckschicht liegende Zone der Filtermatte eine auf der Filtermatte angeordnete Grundschicht, welche den Farbstoff enthält. Diese Grundschicht kann in einem gleichen Verfahren auf die Filtermatte aufgebracht werden wie die Deckschicht. Zum Aufbringen sowohl der Grundschicht als auch der Deckschicht kommt beispielsweise ein Siebdruck, ein Schablonendruck, ein Maskenspritzverfahren o.dgl. in Betracht. Der schichtenweise Aufbau der erfindungsgemäßen Filtermatte hat den Vorteil, daß der Farbstoff bei einem Kontakt mit Fett oder Öl durch die Deckschicht hindurch sehr deutlich zum Vorschein kommt.

Der Farbstoff kann auf das Faservlies flächendeckend oder vorzugsweise in Form eines geometrischen Musters aufgebracht werden. Desgleichen kann auch die Deckschicht flächendeckend oder in Form eines vorzugsweise der Grundschicht entsprechenden geometrischen Musters aufgebracht werden.

Bei einer anderen Ausführungsform der erfindungsgemäßen Filtermatte ist die unter der Deckschicht liegende Zone von der Filtermatte selbst gebildet. Eine derartig aufgebaute Filtermatte hat den besonderen Vorteil, daß nur eine Schicht, nämlich die Deckschicht in einem besonderen Arbeitsgang hergestellt zu werden braucht, während die Zone nicht in Gestalt einer Schicht vorliegt, die ebenfalls in einem eigenen Arbeitsgang hergestellt werden müßte, sondern vom Faservlies selbst gebildet wird. Eine derartige Filtermatte ist also noch einfacher herstellbar als eine Filtermatte der weiter oben beschriebenen Art, wobei die Indikatoreigenschaften für Fett oder Öl jeweils gleich gut sind.

Die auf der Zone angeordnete Deckschicht enthält vorzugsweise Kieselsäure. Eine derartig zusammengesetzte Deckschicht, die im Neuzustand weiß bzw. farblos ist, wird bei einem ausreichenden Kontakt mit Fett oder Öl mindestens durchscheinend bzw. durchsichtig, so daß der unter der Deckschicht vorhandene Farbstoff deutlich sichtbar wird. Bei diesem Farbstoff kann es sich um einen herkömmlichen Einkomponentenfarbstoff oder um einen Zweikomponentenfarbstoff handeln, dessen zwei Hauptkomponenten durch Farbsynthese miteinander reagieren und die beide in der Grundschicht vorgesehen sind. Es ist jedoch auch möglich, eine der beiden Hauptkomponenten des Farbstoffes in der Grundschicht und die zweite Hauptkomponente in der Deckschicht vorzusehen. Bei einer derartigen erfindungsgemäßen Filtermatte sind zwei dünne Schichten vorgesehen, von denen die eine, nämlich die Deckschicht bei ausreichendem Kontakt mit Fett und/oder Öl mindestens durchscheinend wird, so daß die darunterliegende Schicht deutlich zu erkennen ist.

Die eine der beiden Hauptkomponenten des Indikatorfarbstoffes kann auch in der Filtermatte vorgesehen sein, und die zweite Hauptkomponente in der Deckschicht.

Bei der zuletzt genannten Ausbildung einer erfindungsgemäßen Filtermatte ist es einfach möglich, die eine Hauptkomponente des Farbstoffes beispielsweise dem Bindemittel des Faservlieses zuzugeben, oder das Faservlies mit dieser einen Hauptkomponente zu imprägnieren, und die zweite Hauptkomponente des Farbstoffes in der Deckschicht vorzusehen, d.h. die zweite Hauptkomponente des Farbstoffes dem Material der Deckschicht zuzugeben. Auf diese Weise ist es nur erforderlich, das Faservlies mit einer Deckschicht zu versehen, die in einem einzigen Arbeitsgang einfach herstellbar ist. Diese weiße oder schwach pastellfarbige Deckschicht hat den Vorteil, daß sich bei der Einwirkung von Fett oder Öl ein sehr deutlich sichtbarer Farbumschlag ergibt.

Es hat sich als vorteilhaft erwiesen, daß die eine Hauptkomponente des Indikatorfarbstoffes ein Produkt aus der Naphtolgruppe und die zweite Hauptkomponente ein stabilisiertes Diazoniumsalz ist. Die im Handel erhältichen Farbstoffe aus der Naphtolgruppe werden als Naphtol AS bezeichnet. Eine Besonderheit dieser Farbstoffe ist, daß sie nicht in der farbigen Endform zur Anwendung gelangen, sondern erst durch einen chemischen Prozess aus zwei Komponenten erzeugt werden. Dabei ist die erste Komponente das Naphtol, das eine gelbliche Farbe aufweist. Dieses Naphtol wird durch Zusatz von Alkohol und/oder durch Zusatz einer Base reaktionsfähig gemacht. Die zweite Hauptkomponente in Form eines stabilisierten Diazoniumsalzes ist gut und problemlos lagerfähig, so daß seine Anwendung in Verbindung mit der ersten Komponente einfach möglich ist. Derartige stabilisierte Diazoniumsalze sind beispielsweise als Azanilsalze bekannt. Der eigentliche Farbstoff entwickelt sich aus den beiden genannten Hauptkomponenten nach dem Zusammenfügen durch Farbstoffsynthese. Die Reaktionsbedingungen während der Farbstoffsynthese sind dabei von den verwendenten Komponenten abhängig. Die Farbstoffsynthese, die allgemein als Kupplung bezeichnet wird, kann sowohl sauer als auch neutral oder basisch erfolgen. Die Einstellung des $p_H$-Wertes ist von den zur Anwendung gelangenden Hauptkomponenten selbst abhängig.

Besonders vorteilhaft ist es, wenn das Faservlies der erfindungsgemäßen Filtermatte mit einem Flammschutzmittel und/oder einem Bindemittel und mit dem Produkt aus der Naphtolgruppe imprägniert ist. Eine derartige Imprägnierung der Filtermatte ist sehr einfach durchführbar. Sie hat den Vorteil, daß auf diese einfache Weise die eine Hauptkomponente des durch Farbsynthese entstehenden Farbstoffes bereits im Faservlies der Filtermatte vorhanden ist, so daß nur noch die zweite Hauptkomponente des Farbstoffes mit der ersten Komponente zusammengebracht zu werden braucht. Dieses Zusammenbringen der zweiten Hauptkomponente mit der ersten im Faservlies vorhandenen Hauptkomponente kann sehr einfach dadurch geschehen, daß die Deckschicht außer der Kieselsäure einen Verdicker, eine Kunststoffdispersion mit gutem Pigmentbindevermögen und vor allem das stabilisierte Diazoniumsalz enthält. Dieses stabili-

- 9 -

0179419

sierte Diazoniumsalz in Form eines Azanilsalzes ist im allgemeinen farblos. Nach dem Aufbringen der Deckschicht, was z.B. in einem Siebdruckvorgang, in einem Schablonenspritzvorgang o. dgl. geschehen kann, wird die bedruckte Filtermatte in einem Heißluftofen getrocknet. Bei dieser Temperaturbehandlung der Filtermatte entwickelt sich an der Grenzfläche zwischen dem das Naphtolprodukt als erste Hauptkomponente des Farbstoffes enthaltenden Faservlieses und der das stabilisierte Diazoniumsalz als zweite Hauptkomponente enthaltenden Deckschicht beispielsweise in der Konsistenz einer Druckpaste eine Grenzschicht mit einem Farbton , der infolge der in der Deckschicht enthaltenen Kieselsäure hell pastellfarbig ist. Der Farbstoff liegt bei der erfindungsgemäßen Filtermatte in besonders vorteilhafter Weise also nur in einer dünnen Schicht vor, so daß der Farbumschlag bei einem Kontakt der Filtermatte mit Fett oder Öl ungleich deutlicher sichtbar ist als bei einem Farbstoff der bekannten Art, der aus einem homogenen Gemisch zweier Farbstoffe besteht, von denen mindestens einer in Öl oder Fett löslich ist. Ein weiterer Vorteil der erfindungsgemäßen Filtermatte besteht darin, daß der Farbindikator in Verbindung mit praktisch allen Arten bekannter Faservliese verwendet werden kann, weil bei der erfindungsgemäßen Filtermatte ein Maskierverfahren verwendet wird und nicht eine Farbstoffmigration.

Die Deckschicht auf der erfindungsgemäßen Filtermatte kann die folgenden Bestandteile aufweisen:

500 - 1000 Gewichtsteile Kieselsäure,

10 - 100 Gewichtsteile Verdicker,

50 - 500 Gewichtsteile Kunststoffdispersion, und

5 - 50 Gewichtsteile Diazoniumsalz.

Dabei kann das Diazoniumsalz der zweiten Hauptkomponente des Farbstoffes ein Azanilrotsalz sein.

Weitere Einzelheiten, Merkmale und Vorteile ergeben sich aus der nachfolgenden Beschreibung zweier Ausführungsbeispiele der erfindungsgemäßen Filtermatte. Im Ausführungsbeispiel 1 wurde ein Faservlies aus Zellwollfasern im Flächengewicht von 130 g/m² mit einer Kunstharzdispersion imprägniert, die außer einem Flammschutzmittel auch 5-50 g/l Naphtol AS-TR enthält. Dabei werden pro m² Faservlies 20 g Festsubstanz aus Flammschutzmit- tel und/oder Einemittel und Naphtol AS-TR in das Faservlies einge- bracht. Das derart imprägnierte Faservlies wird anschließend mit einer Druckpaste bedruckt, die u.a. die zweite Haupt- komponente des Indikatorfarbsotfes, nämlich Azanilrot- salz KB neu enthält. Diese Druckpaste setzt sich wie folgt zusammen:

600 - 850 Gewichtsteile Kieselsäure

20 - 90 Gewichtsteile Verdicker (beispielsweise Mirox VRN der Firma Stockhausen)

100 - 300 Gewichtsteile Kunststoffdispersion mit gutem Pigmentbindevermögen (z.B. Plex 4871 D der Firma Röhm)

5 - 50 Gewichtsteile Azanilrotsalz KB neu.

Insgesamt wird auf das imprägnierte Faservlies so viel Druckpaste aufgedruckt, daß sich nach dem Trocknen des bedruckten Faservlieses eine Gewichtszuname von 5-30 g/m² Faservlies ergibt.

Bei einem $p_H$-Wert von 7-8 entwickelt sich während der Trockung in einem Heißluftofen an der Grenzfläche zwischen der Druckpaste und der Oberfläche des Faservlieses eine farbige Grenzschicht. Die beiden Hauptkomponenten des Indikatorfarbstoffes kuppeln also im neutralen bis leicht basischen Bereich. Das ist besonders vorteilhaft, weil auf diese Weise die Verträglichkeit des Faservlieses mit der Druckpaste am günstigsten und eine Schädigung der Faser ausgeschlossen ist.

Die Indikatorbeschichtung hat nach dem Trocknungsprozess einen leicht rötlichen Farbton. Diese Beschichtung schlägt bei einem ausreichenden Kontakt mit Fett oder Öl sehr deutlich sichtbar zu einem kräftigen Rot um, so daß sich eine ausgezeichnete Anzeige ergibt, wann eine erfindungsgemäße Filtermatte gegen eine neue erfindungsgemäße Filtermatte ausgetauscht werden sollte.

Im Ausführungsbeispiel 2 wurde ein Faservlies aus Polyesterfasern im Flächengewicht von 180 g/m² und einer Dicke von 15 mm-18 mm mit einer Kunstharzdispersion besprüht, die außer einem Flammschutzmittel auch 2-20 g Naphtol AS-TR enthält. Das derartig oberflächlich besprühte Faservlies wird anschließend in an sich bekannter Weise mit einer Druckpaste bedruckt. Dabei kann die gleiche Druckpaste, wie im Ausführungsbeispiel 1 beschrieben worden ist, eingesetzt werden.

Nach der Trocknung des so behandelten Faservlieses ergibt sich an der Grenzfläche zwischen der Deckschicht und der darunter befindlichen Schicht eine Grenzschicht mit einem Farbton. Bei einem ausreichenden Kontakt mit Fett oder Öl wird ein kräftiges Rot sichtbar. Auch eine nach dem Ausführungsbeispiel 2 erzeugte erfindungsgemäße Filtermatte ist also sehr gut als Indikator zur Anzeige einer hohen Fett- oder Ölkonzentration, wie sie bei Küchendunstabzugshauben auftreten kann, geeignet.

Weitere Einzelheiten, Merkmale und Vorteile ergeben sich aus der nachfolgenden Beschreibung zweier Ausführungsbeispiele erfindungsgemäßer Filtermatten mit Fettindikator. Es zeigen:

Fig. 1    einen Schnitt durch ein Ausführungsbeispiel einer Filtermatte, und

Fig. 2    einen Schnitt durch ein anderes Ausführungsbeispiel einer Filtermatte.

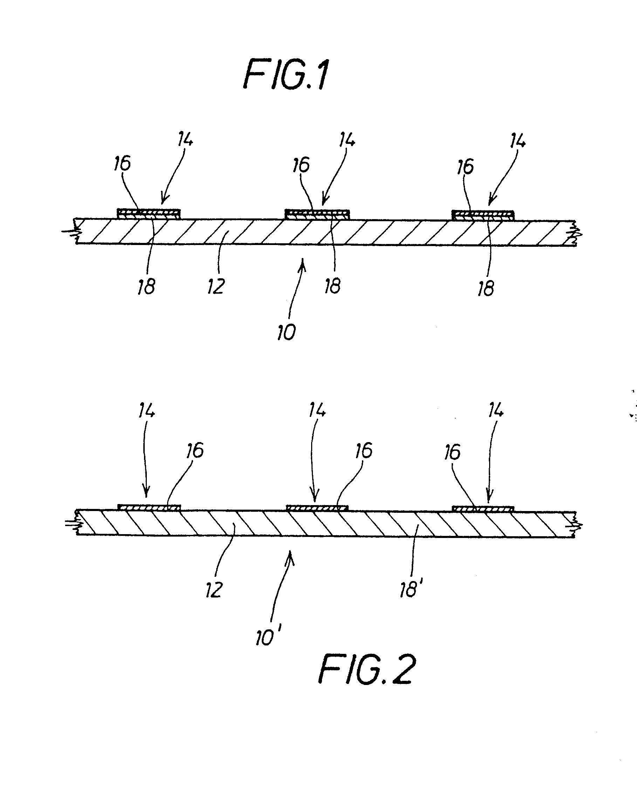

Fig. 1 zeigt eine Filtermatte 10 mit einem Fettindikator, wobei die Filtermatte 10 aus einem Faservlies 12 und einer darauf aufgebrachten Beschichtung 14 besteht, deren Farbe sich bei einem Kontakt mit Fett und/oder Öl deutlich verändert. Die Beschichtung 14 weist eine Deckschicht 16 auf, die bei einem Kontakt mit Fett und/oder Öl mindestens durchscheinend wird, und die Deckschicht 16 ist auf einer Zone 18 der Filtermatte 10 angeordnet, die einen Farbstoff enthält.

Bei dem in Fig. 1 dargestellten Ausführungsbeispiel einer erfindungsgemäßen Filtermatte 10 mit Fettindikator ist die Zone 18 eine auf der Filtermatte 10 unter der Deckschicht 16 angeordnete Grundschicht. Der Farbstoff kann zwei durch Farbsynthese miteinander reagierende Hauptkomponenten aufweisen. Eine der beiden Hauptkomponenten des Farbstoffes kann in der als Grundschicht ausgebildeten Zone 18 und die zweite Hauptkomponete des Farbstoffes kann in der Deckschicht 16 vorgesehen sein. Es ist selbstverständlich auch möglich, daß die beiden Hauptkomponenten des Farbstoffes in der als Grundschicht ausgebildeten Zone 18 vorgesehen sind. Unabhängig von der Lokalisierung der Hauptkomponenten des Farbstoffes enthält die auf der Zone 18 angeordnete Deckschicht 16 Kieselsäure.

Fig. 2 zeigt eine Filtermatte 10' mit einem Fettindikator, die aus einem Faservlies 12 und einer darauf aufgebrachten Beschichtung 14 besteht, deren Farbe sich bei einem Kontakt mit Fett und/oder Öl deutlich verändert. Die Beschichtung 14 besteht aus einer Deckschicht 16, die bei einem Kontakt mit Fett und/oder Öl mindestens durchscheinend wird. Bei dieser Ausführungsform einer erfindungsgemäßen Filtermatte 10' mit Fettindikator ist die Deckschicht 16 auf einer Zone 18' der Filtermatte 10' angeordnet, die einen Farbstoff enthält. Dabei wird die unter der Deckschicht 16 angeordnete Zone 18' von der Filtermatte 10' selbst gebildet. Auch bei dieser Ausführungsform einer Filtermatte 10' weist der Farbstoff zwei durch Farbsynthese miteinander reagierende Hauptkomponenten auf. Die eine der beiden Hauptkomponenten des Farbstoffes ist in der Filtermatte 10' und die zweite Hauptkomponente des Farbstoffes ist in der Deckschicht 16 vorgesehen.

0179419

- 1 -

Ansprüche:

1. Filtermatte (10,10') mit Fettindikator, die aus einem Faservlies (12) und einer darauf aufgebrachten Beschichtung (14) besteht, deren Farbe sich bei einem Kontakt mit Fett und/oder Öl deutlich verändert, d a d u r c h   g e k e n n   z e i c h n e t, daß die Beschichtung (14) mindestens aus einer Deckschicht (16) besteht, die bei einem Kontakt mit Fett und/oder Öl mindestens durchscheinend wird, und daß die Deckschicht (16) auf einer Zone (18,18') der Filtermatte (10,10') angeordnet ist, die einen Farbstoff enthält.

2. Filtermatte nach Anspruch 1, dadurch gekennzeichnet, daß die Zone (18) eine auf der Filtermatte (10) unter der Deckschicht (16) angeordnete Grundschicht ist.

3. Filtermatte nach Anspruch 1, dadurch gekennzeichnet, daß die unter der Deckschicht (16) angeordnete Zone (18') von der Filtermatte (10') selbst gebildet ist.

4. Filtermatte nach einem der Ansprüche 1 bis 3, dadurch gekennzeichnet, daß die auf der Zone (18) angeordnete Deckschicht Kieselsäure enthält.

5. Filtermatte nach einem der Ansprüche 1 bis 4, dadurch gekennzeichnet, daß der Farbstoff zwei durch Farbsynthese miteinander reagierende Hauptkomponenten aufweist.

6. Filtermatte nach einem der Ansprüche 1 bis 5, dadurch gekennzeichnet, daß die beiden Hauptkomponenten des Farbstoffes in der Grundschicht vorgesehen sind.

7. Filtermatte nach einem der Ansprüche 1 bis 5, dadurch gekennzeichnet, daß eine der beiden Hauptkomponenten des Farbstoffes in der Grundschicht und die zweite Hauptkomponente in der Deckschicht (16) vorgesehen ist.

8. Filtermatte nach einem der Ansprüche 1 bis 5, dadurch gekennzeichnet, daß die eine der beiden Hauptkomponenten des Farbstoffes in der Filtermatte (10') und die zweite Hauptkomponente in der Deckschicht (16) vorgesehen ist.

9. Filtermatte nach einem der vorhergehenden Ansprüche, dadurch gekennzeichnet, daß die eine Hauptkomponente des Farbstoffes ein Produkt aus der Naphtolgruppe und die zweite Hauptkomponente ein stabilisiertes Diazoniumsalz ist.

10. Filtermatte nach Anspruch 9, dadurch gelennzeichnet, daß das Faservlies mit einem Flammschutzmittel und/ oder einem Bindemittel und dem Produkt aus der Naphtolgruppe imprägniert ist.

11. Filtermatte nach einem der Ansprüche 1 bis 10, dadurch gekennzeichnet, daß die Deckschicht (16) außer der Kieselsäure einen Verdicker, eine Kunststoffdispersion mit gutem Pigmentbindevermögen und das stabilisierte Diazoniumsalz enthält.

12. Filtermatte nach Anspruch 11, dadurch gekennzeichnet, daß die Deckschicht (16) die folgenden Bestandteile aufweist:

500 - 1000 Gewichtsteile Kieselsäure
10 - 100 Gewichtsteile Verdicker
50 - 500 Gewichtsteile Kunststoffdispersion
5 - 50 Gewichtsteile Diazoniumsalz.

13. Filtermatte nach einem der vorhergehenden Ansprüche, dadurch gekennzeichnet, daß das Diazoniumsalz der zweiten Hauptkomponente des Indikatorfarbstoffes ein Azanilrotsalz ist.

## FIG.1

## FIG.2